# EUROPÄISCHE PATENTSCHRIFT

(11) **EP 1 044 100 B1**
(45) Veröffentlichungstag und Bekanntmachung des Hinweises auf die Patenterteilung: **13.08.2003**
(21) Anmeldenummer: 98959693.7
(22) Anmeldetag: 23.12.1998
(51) Int. Cl.: B32B 15/00, B32B 7/08, B23K 20/02, F16L 59/08

(54) **VERFAHREN ZUR HERSTELLUNG EINES ISOLATIONSPAKETES FÜR EIN ISOLATIONSTEIL**
METHOD FOR PRODUCING AN INSULATING PACK FOR AN INSULATING PART
PROCEDE POUR PREPARER UN NOYAU FEUILLETE ISOLANT POUR UNE PIECE ISOLANTE

(30) Priorität: 30.12.1997 US 70188 P
(43) Veröffentlichungstag der Anmeldung: 18.10.2000
(73) Patentinhaber: RIETER AUTOMOTIVE (INTERNATIONAL) AG, 8702 Zollikon (CH)
(72) Erfinder: ZWICK, Evelyn, CH-8123 Ebmatingen (CH); WILDHABER, Alexander, CH-8880 Walenstadt (CH)
(74) Vertreter: Felber, Josef
(86) Internationale Anmeldenummer: CH9800551
(87) Internationale Veröffentlichungsnummer: WO99034974

(56) Entgegenhaltungen:
- EP-A- 0 439 046
- DE-A- 4 329 411
- GB-A- 2 097 311

## Beschreibung

Die vorliegende Erfindung betrifft ein Verfahren zur Herstellung eines Isolationspakets für ein Isolationsteil gemäss Oberbegriff des Anspruchs 1, ein damit hergestelltes Isolationspaket gemäss Oberbegriff des Anspruchs 4, sowie ein Trennwerkzeug für die Durchführung des Verfahrens, gemäss Anspruch 9.

In der Automobilindustrie, sowie in anderen technischen Gebieten, besteht ein Bedarf an dünnen thermischen Isolationsteilen, die in einfacher Weise an ihren Verwendungszweck angepasst werden können. Es besteht also der Wunsch, derartige Isolationsteile, insbesondere dünne Hitzeschilde, welche in einfacher Weise in eine gewünschte Form gebracht werden können, wirtschaftlich herstellen zu können. Bekannte Isolationsteile sind aus einem Stapel aus mehreren Aluminiumfolien und/oder Aluminiumblechen aufgebaut. Derartige Isolationsteile finden zunehmend Verwendung bei Hitzeschilden für Fahrzeuge.

Ein derartiges Hitzeschild ist bspw. in der US 5,011,743 und ihrer entsprechenden PCT-Anmeldung WO 91/10560 offenbart. Diese Druckschriften offenbaren ein Folienpaket, welches wärmeleitende Zonen, sogenannte Wärmesenken, und wärmeisolierende Zonen umfasst. Insbesondere weisen diese Folien Einprägungen oder Noppen auf, die dazu führen, dass die gestapelten Folien voneinander beabstandet sind. Die einzelnen Folien können hermetisch dicht miteinander verbunden sein, womit der Einschluss eines Gases z. B. Xenon ermöglicht wird. In einer Weiterbildung dieses bekannten Folienpakets sind, zur Verbesserung der akustischen Wirksamkeit, die einzelnen Folien perforiert. Die Randbereiche dieser Folienpakete werden in der Praxis ohne wesentliche Druckkraft zusammengedrückt und in separaten Verfahrensschritten geschnitten, und anschliessend gebördelt, heissversiegelt oder mechanisch verbunden. Bei diesen bekannten Folienpaketen können sich, durch die mechanische Beanspruchung bspw. während des Transports oder im Betrieb, die Folien in ihrem Verbindungsbereich wieder auftrennen.

Das oben beschriebene Isolationsteil, respektive Hitzeschild weist eine Vielzahl Nachteile auf. Ein dem Fachmann offensichtlicher Nachteil besteht darin, dass Wärme durch die Wärmesenkenbereiche auf die andere Seite des Isolationsteils fliesst und wegen der relativ breiten Randbereiche der Anteil der wirksamen Isolationsfläche am gesamten Hitzeschild in unerwünschter Weise reduziert wird. Darüberhinaus erweist sich die konventionelle Fertigung derartiger Hitzeschilde als werkzeugmässig aufwendig. Wegen der bei der Verwendung von Streckblech auftretenden scharfen Zacken und der damit verbundenen hohen Verletzungsgefahr für das Personal, werden derartige Streckbleche nicht eingesetzt.

Aufgabe der vorliegenden Erfindung ist es deshalb, ein kostengünstiges, d.h. werkzeugmässig einfaches Verfahren zur Herstellung eines Isolationpakets für ein Isolationsteil, bzw. ein Hitzeschild zu schaffen, welches es erlaubt, in möglichst wenigen Arbeitsschritten ein verarbeitungsfreundliches und sicheres Hitzeschild aus einem Stapel metallischer Blätter herzustellen, wobei die einzelnen Blätter dieses Stapels in ihren Randbereichen miteinander fest verbunden sind, ohne dass dabei Wärmesenkenbereiche erzeugt werden.
Im folgenden sollen unter metallischen Blättern generell flächige Metallteile verstanden werden. Diese flächigen Metallteile können unterschiedliche Dicken aufweisen, können perforiert sein oder eine besondere Struktur aufweisen. Insbesondere sollen darunter perforierte (gelocht oder mit Fissuren) oder unperforierte Folien, dünne Metallblätter, respektive Metallbleche, Folien in Form eines Streckmetallgitters, Streckfolien, Metallgewirke, -gespinste, -gewebe oder ähnliche flächige Strukturen verstanden werden. Diese Blätter können auch beschichtet sein und/oder wabenartige Verformungsmuster aufweisen (Wabenblech) oder in anderer Weise geformt sein, insbesondere genoppt sein.

Diese Aufgabe wird erfindungsgemäss durch ein Verfahren mit den Merkmalen des Anspruchs 1 gelöst, und insbesondere durch ein Verfahren zur Herstellung eines Isolationspakets mit einem Stapel aus mehreren metallischen Blättern, welche geprägt und/oder perforiert sein können, bei welchem Verfahren die einzelnen Blätter des Stapels im Kantenbereich kontinuierlich miteinander kaltverschweisst und gleichzeitig vom Restmaterial getrennt werden. Unter Kaltschweissen wird im folgenden eine metallurgische Verbindung verstanden, die durch eine plastische Verformung von zwei oder mehr benachbarten Blättern zu Stande kommt, bei welcher Verformung sich das metallische Material benachbarter Blätter stoffschlüssig verbindet. Mit Aluminium lässt sich eine derartige Verbindung erzielen, wenn das Material beispielsweise um ca. 75% komprimiert wird.

Bei dem erfindungsgemässen Verfahren werden mindestens zwei Metallblätter gestapelt, wobei einzelne dieser Blätter geprägt sein können. Der solchermassen erzeugte Stapel wird erfindungsgemäss entlang einer vorgegebenen Kontur kaltverschweisst und gleichzeitig vom Schnittabfall getrennt. Dies wird vorzugsweise durch eine mit einem geeigneten Trennwerkzeug ausgerüstete Formpresse erreicht. Es versteht sich, dass dieses Kaltschweissen der Stapelkanten und Trennen der einzelnen Blätter des Stapels auch mit anderen geeigneten Trennwerkzeugen bewerkstelligt werden kann.

Ausserdem kann mit diesem Kaltschweissverfahren ein Isolationspaket aus einer Vielzahl unterschiedlicher
(bspw. genoppter, gelochter oder gitterförmiger) Blätter, Folien oder Bleche hergestellt werden. Bei Verwendung von Streckmetallblech können Ränder erzeugt werden, welche keine scharfen Zacken aufweisen. Das erfindungsgemässe Verfahren erlaubt darüberhinaus, Isolationspakete in einfacher Weise zu verformen. Insbesondere erweist sich die Verwendung von streckmetallartigen Blättern, im Gegensatz zu perforierten Blättern, als besonders vorteilhaft, da derartige Streckmetallblätter leichter sind, besser verformbar sind sowie weniger leicht einreissen. Darüberhinaus lässt sich die akustische Wirksamkeit dieser streckmetallartigen Blätter durch die Ausbildung unterschiedlich grosser Öffnungen in einfacher Weise kontrollieren resp. einstellen.

Es ist eine weitere Aufgabe der vorliegenden Erfindung, ein akustisch wirksames Isolationspaket, insbesondere ein Hitzeschild mit einem Stapel aus metallischen Blättern zu schaffen, welches die oben aufgezählten Mängel überwindet, wobei die einzelnen Blätter dieses Stapels in ihren Randbereichen miteinander fest verbunden sind, ohne dass dabei Wärmesenkenbereiche erzeugt werden. Darüberhinaus soll ein Isolationspaket geschaffen werden, welches sich in einfacher Weise stark verformen lässt, ohne dabei Schaden zu nehmen oder sich beim Transport respektive Gebrauch aufzutrennen.

Diese Aufgabe wird erfindungsgemäss durch ein Isolationspaket mit den Merkmalen des Anspruchs 4 gelöst und insbesondere durch ein Isolationspaket, bei welchem die einzelnen Blätter des verwendeten Stapels entlang ihrer gemeinsamen Ränder miteinander kaltverschweisst sind. Bevorzugte Ausführungsformen dieses Isolationspakets weisen die Merkmale der abhängigen Ansprüche 5 bis 8 auf. Insbesondere ist das erfindungsgemässe Isolationspaket mit mindestens einer Falzlinie versehen, um eine starke Verformung des gesamten Isolationspakets in einfacher Weise zu ermöglichen.

In einer bevorzugten Ausgestaltung dieser Erfindung besteht das Isolationspaket, respektive Hitzeschild, aus einer Vielzahl von Aluminiumfolien, welche entlang ihrer jeweiligen Kanten miteinander kaltverschweisst sind. Mit diesen kaltverschweissten Folien wird eine Randverbindung erzeugt, welche gegenüber den Präge- oder Klebeverfahren, wie sie im Stand der Technik, bspw. in der US 5,011,743 offenbart werden, wesentlich stabiler ist. Das erfindungsgemässe Isolationspaket ist lediglich entlang seines Kantenbereichs verschweisst, was über dem gesamten inneren Bereich gute Wärmeisolationseigenschaften gewährleistet.

In einer bevorzugten Ausführungsform umfasst das Isolationspaket eine Vielzahl von gestapelten Metallfolien, sowie ein Trägerblech und eine Deckfolie oder ein Deckblech. Bei dieser Ausführungsform besteht das Trägerblech aus einem Streckmetall oder einem Lochblech. In einer weiteren besonderen Ausführungsform umfasst die Erfindung einen Folienstapel, bei welchem die einzelnen Folien perforiert sind und auf einem perforierten Trägerblech befestigt sind. Erfindungsgemäss sind bei all diesen Ausführungsformen mindestens die Folien des Folienstapels miteinander kaltverschweisst. Es versteht sich jedoch, dass die Folien des Folienstapels auch direkt mit dem Trägerblech und/oder der Deckfolie kaltverschweisst sein können.

Es ist eine zusätzliche Aufgabe der vorliegenden Erfindung, geeignete Mittel zur Durchführung des erfindungsgemässen Verfahrens zu schaffen.

Diese zusätzliche Aufgabe wird erfindungsgemäss durch die Verwendung eines Trennmessers mit den Merkmalen des Anspruchs 9 gelöst, und insbesondere mit einem Trennmesser, dessen Trennflanken zur Trennebene vorzugsweise unterschiedlich stark geneigt sind. Eine Weiterbildung dieses Trennmessers weist die Merkmale des abhängigen Anspruchs 10 auf.

Bei der Verwendung eines Trennwerkzeugs kann entlang der Kanten des Stapels aus metallischen Blättern eine derartige Kaltverschweissung erzeugt werden. Dabei werden die einzelnen Blätter gleichzeitig miteinander verbunden und in eine spezielle Kontur gebracht.

Eine besonders vorteilhafte Ausgestaltung des Trennwerkzeugs weist ein Trennmesser auf, welches zwischen einer ersten Trennflanke und der Kaltschweissebene einen spitzen Winkel von vorzugsweise 60° aufweist und welches Trennmesser zwischen einer zweiten Trennflanke und der Kaltschweissebene einen spitzen Winkel von vorzugsweise 25° aufweist, derart, dass zwischen den beiden Trennflanken des Trennmessers ein stumpfer Winkel, bspw. 95°, gebildet wird.

Die erfindungsgemässe Anwendung einer Kaltschweissung erweist sich als wesentlicher Vorteil gegenüber bekannten Verfahren zur Verbindung der einzelnen Blätter eines Stapels, insofern als eine solche Kaltschweissung wesentlich einfacher und schneller, sowie kostengünstiger und sicherer vorgenommen werden kann. Wenn dieses Kaltschweissverfahren mit einem Trennschritt kombiniert wird, kann damit die Anzahl der Verfahrensschritte zur Herstellung derartiger Isolationspakete, gegenüber herkömmlichen Verfahren (insbesondere gegenüber aufwendigen Bördelverfahren), wesentlich reduziert werden.

Das erfindungsgemässe Isolationspaket weist keine nachteiligen Wärmesenken auf, respektive weist eirien äusserst schmalen Bereich auf, in welchem die einzelnen Blätter stoffschlüssig und damit zuverlässig und langlebig miteinander verbunden sind. Darüberhinaus weisen die erfindungsgemäss hergestellten Isolationspakete, sogar bei Verwendung von streckmetallartigen Blätter, keine scharfen Zacken auf und lassen sich an ihren Falzlinien in jede gewünschte Form falten, ohne dabei zu reissen, zu brechen oder sich in ihren Randbereichen aufzutrennen. Darüberhinaus lässt sich der geometrische Verlauf der kaltverschweissten Verbindung beliebig gestalten, z.B. als Schlangenlinie oder komplementär zum geometrischen Verlauf des Randbereichs eines aus den gleichen Blättern herzustellenden, benachbarten Isolationspakets, insbesondere Hitzeschildes. Damit kann insbesondere der Schnittabfall bei der Herstellung dieser Isolationspakete minimiert werden.

Der obengenannte Erfindungsgegenstand und weitere Ausgestaltungen, Vorteile und Eigenschaften der Erfindung werden im folgenden anhand der Figuren beispielhaft erläutert oder gehen offensichtlich aus der folgenden Beschreibung der bevorzugten Ausführungsformen hervor.
- Fig. 1: zeigt in perspektivischer Ansicht eine Ausführungsform eines erfindungsgemäss verbundenen Stapels aus metallischen Blättern;
- Fig. 2: zeigt eine Ansicht eines erfindungsgemässen Stapels im Querschnitt während des Kaltschweissens;
- Fig. 3: zeigt eine Draufsicht eines erfindungsgemäss kaltverschweissten und getrennten Stapels;
- Fig. 4: zeigt eine Ansicht einer besonderen Gestaltung eines erfindungsgemässen Isolationspakets;
- Fig. 5: zeigt Mittel zur Durchführung des Verfahrens zur Herstellung eines erfindungsgemässen Isolationspaketes; und
- Fig. 6: zeigt weitere Mittel zur Durchführung des erfindungsgemässen Verfahrens.

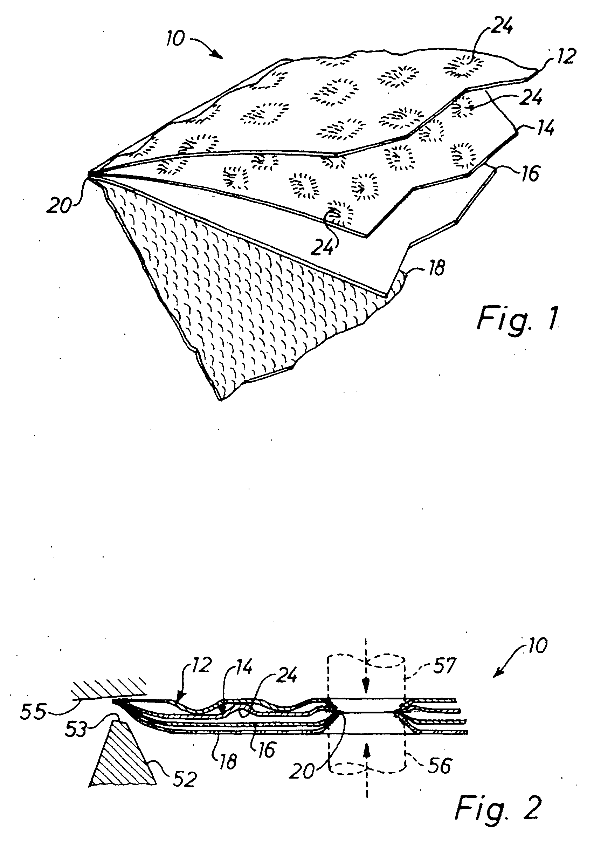

In den Figuren 1 bis 3, in denen gleiche Komponenten mit gleichen Referenzzeichen versehen sind, ist ein mehrlagiges Isolationspaket 10 für ein Isolationsteil respektive Hitzeschild dargestellt. Es wird hier darauf hingewiesen, dass in den Figuren die einzelnen Blätter nicht massstäblich dargestellt sind. Das Isolationspaket 10 findet seine Verwendung vorzugsweise im Unterbodenbereich bei Fahrzeugen und insbesondere als akustisch wirksames Hitzeschild. Solche Isolationspakete können zusätzliche Träger-, Zwischen- und Deckschichten aufweisen. Bei bekannten Ausführungsformen werden perforierte Trägerbleche, gewirkte Zwischenschichten oder flammgespritzte Deckschichten verwendet. Es sind auch Isolationsteile bekannt, bei denen die Isolationspakete lose zwischen einem Trägerblech und einer Deckfolie angeordnet sind.

Das Isolationspaket 10 umfasst eine Vielzahl metallischer Blätter, welche in der in Figur 1 gezeigten Ausgestaltung eine obere geprägte bzw. genoppte Folie 12 mit Noppen 24, eine geprägte Zwischenfolie 14, ebenfalls mit Noppen 24, eine glatte respektive ungeprägte Folie 16 und eine Streckfolie 18 umfasst. Diese Streckfolie 18 kann Trägerfunktionen aufweisen und ist gut verformbar. Anstelle einer solchen Streckfolie 18 kann auch ein Lochblech bekannter Art vorgesehen sein. Alle Blätter dieses Isolationspaketes 10 weisen in Draufsicht die gleiche Kontur auf und sind mittels eines Kaltschweissprozesses an ihren gemeinsamen Rändern miteinander metallurgisch, d.h. stoffschlüssig verbunden. Diese metallurgische Verbindung führt zu einer umlaufenden, zusammenhängenden, integralen Schweissnaht 20.

In Figur 1 ist deutlich gemacht, dass durch die Kaltverschweissung der einzelnen Blätter eine feine Schweissnaht 20 entsteht, die keine scharfen Kanten aufweist und deshalb auch die Verwendung von streckmetallartigen Blättern oder dünnen Streckblechen erlaubt. Diese Schweissnaht 20 ist ca. 0.3 mm breit und unterscheidet sich deutlich von den bekannten, ca. 7 mm breiten, gequetschten, komprimierten oder gebördelten Rändern.

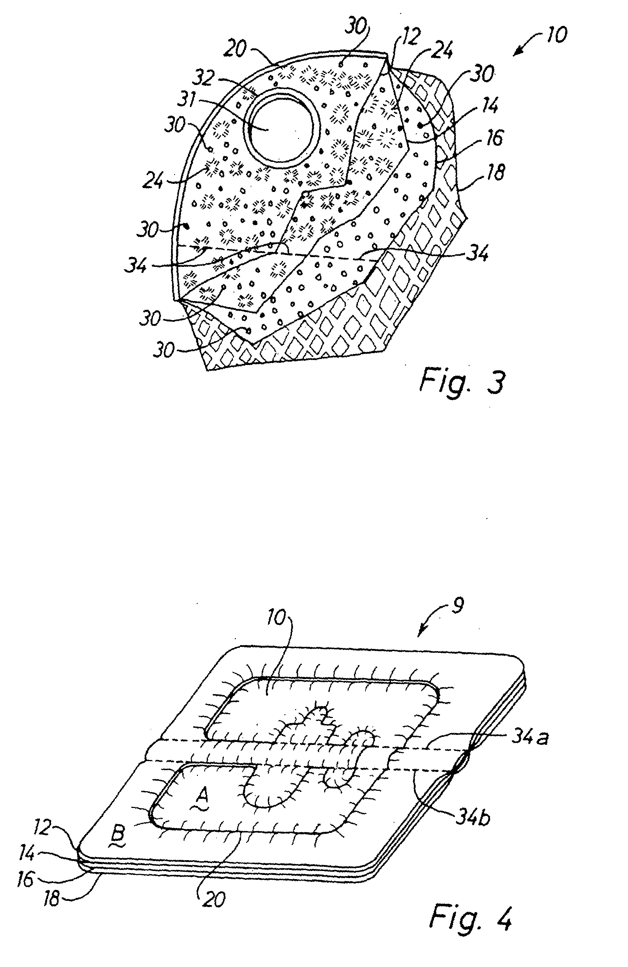

Die in den Figuren 2 und 3 dargestellten Isolationspakete weisen im wesentlichen dieselbe Folienfolge auf, wie dasjenige in Figur 1. Die Folien dieses Isolationspakets 10 in Figur 3 weisen alle eine Vielzahl von Perforationen 30 auf, um damit die akustische Wirksamkeit des Isolationspakets zu verbessern. Bei den in diesen Figuren 2 und 3 dargestellten Ausführungsbeispielen weist das Isolationspaket 10 eine im Innern angeordnete Aussparung 31 für seine Befestigung auf, dessen Rand 32 wiederum durch eine Schweissnaht 20 gebildet wird. Mit dem erfindungsgemässen Verfahren wird die Aussparung 31 durch die Bildung einer kaltverschweissten Naht 20 und ein gleichzeitiges Trennen der jeweiligen Blätterbereiche A, B erzeugt. In einer bevorzugten Ausführungsform wird das Isolationspaket 10 gleichzeitig mit vorgegebenen Falzlinien 34 versehen, welche Falzlinien aus kontinuierlich verlaufenden Einkerbungen und/oder partiell verlaufenden Einschnitten bestehen.

Erfindungsgemäss sind die einzelnen Blätter aus einem Material gewählt, welches sich unter Druck plastisch verformen lässt, derart, dass sich die einzelnen Schichten unter Druck miteinander metallurgisch verbinden. Vorzugsweise wird als Material Aluminium mit einer Dicke von ca. 50 µm verwendet, obgleich auch andere Metalle oder Legierungen, respektive andere Dicken verwendet werden können, wie beispielsweise, Stahlblech, Kupfer oder Gold. Entsprechend ist beim beschriebenen Ausführungsbeispiel die streckmetallartige Folie 18 respektive das gelochte Trägerblech vorzugsweise aus Aluminium.

Die geprägten oder genoppten Folien 12 und 14 können in einer konventionellen Formwalze hergestellt werden, wobei durch das Prägen eine Vielzahl Noppen 24 entstehen, wie sie in Figur 2 dargestellt sind. Diese Noppen 24 beabstanden die einzelnen Folien voneinander und führen zu einem isolierenden und akustisch wirksamen Luftraum zwischen den einzelnen Folien.

Die streckmetallartige Folie 18 und die geprägten respektive genoppten Folien 12 und 14 trennen die einzelnen Folien derart voneinander, dass eine allfällige Wärmeübertragung aufgrund eines direkten metallischen Kontaktes minimiert wird und damit eine gute Wärmeisolierung erzeugt wird. Die Verwendung einer Streckfolie 18 oder eines Lochblechs führt zu einer Verbesserung der akustischen Absorptionsfähigkeit des Isolationspaketes.

Obgleich das Isolationspaket 10 mit den Folien 12, 14, 16 und 18 in einer bestimmten Anordnung dargestellt ist versteht es sich, dass dem Fachmann andere Kombinationsmöglichkeiten naheliegen. Beispielsweise können zusätzliche geprägte Folien, zusätzliche Streckfolien oder Zwischenlagen bekannter Art verwendet werden. Es liegt im Ermessen des Fachmanns, diese einzelnen Blätter und deren Perforationsöffnungen respektive deren Dicke und Beabstandung so zu wählen, dass die erforderlichen Eigenschaften in optimaler Weise genutzt werden können.

Kaltschweissverfahren sind dem Fachmann grundsätzlich bekannt, finden jedoch in Formpresswerkzeugen keine Verwendung. Beim erfindungsgemässen Verfahren werden die metallurgisch zu verbindenden Metallblätter mit einem derart hohen Druck beaufschlagt, dass die Oberflächenschichten dieser Blätter miteinander eine stoffschlüssige Verbindung eingehen. Bei der vorliegenden Erfindung wird in einer bevorzugten Ausführungsform ein geeignetes, als Trennmesser 51 wirkendes Stahlband mit einer Breite von ca. 1 mm in ein Formpresswerkzeug eingelegt. Dieses Trennmesser 51 ist derart eingelegt, dass dieses der gewünschten Kontur des herzustellenden Isolationspakets folgt. Für die Erzeugung einer erfindungsgemässen Kaltschweissnaht 20 sind, wie aus Figur 2 ersichtlich, die Trennflanken 52 und 53 dieses Trennmessers 51 vorzugsweise asymmetrisch angeordnet. Insbesondere verläuft die dem herzustellenden Isolationspaket 10 zugewandte Trennflanke 53 in einem flacheren Winkel als die dem herzustellenden Isolationspaket 10 abgewandte Trennflanke 52. Diese geometrische Anordnung der Trennflanken führt dazu, dass beim Schliessen des Formpresswerkzeugs die unter der Trennflanke 53 liegenden metallischen Blätter miteinander metallurgisch verbunden werden und im Bereich einer Trennkante 54 durchtrennt werden. In analoger Weise können Werkzeugteile 56 und 57 geformt werden, derart, dass mit ihnen ein Loch 31 aus dem Isolationspaket 10 herausgetrennt werden kann und gleichzeitig der erzeugte Rand in Form einer umlaufenden Schweissnaht 20 kaltverschweisst wird. Eine dazu geeignete Presskraft liegt im Bereich von 1.7 kN pro 10 mm Kantenlänge. Dies entspricht 17 Tonnen Presskraft auf einer Kantenlänge von 1 m. Bei einem Formpresswerkzeug von ca. 1600 x 900 mm², mit welchem mehrere Isolationspakete gleichzeitig, und mit einer gesamten Kantenlänge von etwa 10 bis 20 m gefertigt werden können, ist deshalb eine Presskraft von bis zu 340 Tonnen erforderlich. Dieser Pressdruck kann durch eine Erhöhung der Schliessgeschwindigkeit der Presse wesentlich verringert werden, womit auch die Lebensdauer des Trennmessers verlängert werden kann. Um die voneinander getrennten Blätterbereiche A, B automatisch vereinzeln zu können, kann ein Pressluftwerkzeug bekannter Art verwendet werden.

Die solchermassen hergestellten Isolationspakete 10 werden vorzugsweise als akustisch wirksame Hitzeschilde verwendet und werden insbesondere im Bereich zwischen heissen Fahrzeugteilen (Katalysator, Auspuffrohr etc.) und dem Fahrzeugboden montiert. Es versteht sich, dass diese Isolationspakete auch zwischen Motorraum und Fahrgastzelle eingesetzt werden können.

Figur 4 zeigt einen erfindungsgemäss verschweissten und getrennten Metallblattstapel 9 mit zwei Falzlinien 34a und 34b. Diese Stapel umfasst einen Bereich A, welcher noch nicht vereinzelt ist, d.h. welcher noch im zu entfernenden Restbereich B liegt. Dieser Restbereich B fällt bei der Herstellung eines Isolationspaketes 10 als Schnittabfall an. Bei diesem Metallblattstapel 9 wurde ein schlüssellochförmiger Bereich entlang einer Schweissnaht 20 abgetrennt. Diese besondere Formgebung erlaubt es, das fertige Isolationspaket 10 über eine im Fahrzeug bereits montierte Leitung, beispielsweise ein Elektrokabel oder ein Schlauch, zu schieben. Durch ein Z-artiges Falten des Isolationspakets 10 entlang der Falzlinien 34a, 34b bildet das Isolationspaket 10 eine lochförmige Öffnung, durch welche die montierte Leitung hindurchgeführt werden kann. Es versteht sich, dass der Fachmann, je nach Verwendung des Isolationspakets, andere geeignete Falzlinien und Paketformen, insbesondere kanaloder rohrförmige Abdeckungen, gestalten kann. Die Verwendung von streckmetallartigen oder genoppten Blättern eignet sich in besonderer Weise für derartig stark verformte Isolationsteile.

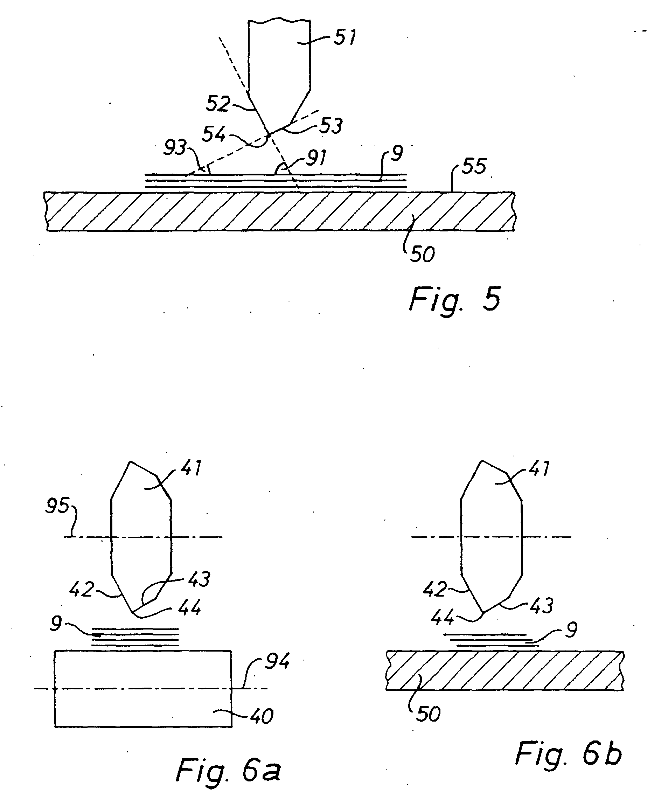

Anhand der Figuren 5, 6a und 6b sollen geeignete Verfahren und Mittel zur Herstellung von Isolationspaketen erläutert werden, bei denen ein ausgewählter Metallblattstapel 9 entlang einer vorgegebenen Kontur kaltverschweisst und gleichzeitig getrennt wird.

In einer bevorzugten Ausführungsform, wie in Figur 5 dargestellt, werden die in gewünschter Weise ausgewählten und genoppten Metallblätter respektive Folien aufeinander gestapelt und in ein Formpresswerkzeug eingelegt. Dieses Formpresswerkzeug weist eine untere harte Formhälfte 50 und eine obere Formhälfte mit einem Trennmesser 51 auf. Das Trennmesser 51 ist in besonderer Weise geformt, um einen eingelegten Metallblattstapel in erfindungsgemässer Weise zu verschweissen und zu trennen. Dieses Trennmesser 51 weist vorzugsweise eine erste Trennflanke 52 auf, welche mit der durch die untere harte Formhälfte 50 gebildeten Auflagefläche 55 einen spitzen Winkel 91, vorzugsweise von 60°, bildet. Das Trennmesser 51 weist darüberhinaus eine zweite Trennflanke 53 auf, welche mit der Auflagefläche 55 einen spitzen Winkel 93, vorzugsweise von 25°, bildet. Die erste und die zweite Trennflanken bilden eine Trennkante 54. Es versteht sich, dass für die Durchführung des erfindungsgemässen Verfahrens auch ein Trennmesser mit 45° zur Auflagefläche geneigten, symmetrisch angeordneten Flanken, verwendet werden kann.

Beim erfindungsgemässen Verfahren wird das Trennmesser 51 derart auf die Auflagefläche 55 gepresst, dass die dazwischenliegenden Blätter plastisch verformt werden und sich dabei metallurgisch verbinden. Bei dieser plastischen Verformung weicht das metallische Material aus dem Bereich der Trennflanke 53 und fliesst zwischen der Trennflanke 53 und der Auflagefläche 55. Mit dem Auftreffen des Trennmessers 51 auf die untere harte Formhälfte 50 wird das derart verschweisste Material entlang der Trennkante 54 getrennt.

In Figur 6a ist ein besonderes Mittel zur Durchführung des erfindungsgemässen Verfahrens in schematischer Weise dargestellt. Dabei wird anstelle einer unteren Formhälfte eine geeignete harte Walze 40 verwendet, die um eine Achse 94 drehbar ist. Anstelle des linearen Trennmessers 51 wird bei dieser Vorrichtung ein rundes oder scheibenförmiges Trennmesser, respektive Rundmesser 41, verwendet, welches um eine Achse 95 drehbar ist und dessen Trennflanken 42, 43 respektive Trennkante 44 in analoger Weise angewinkelt sind. Diese Ausführungsform erlaubt, das vorliegende Verfahren zum Kaltschweissen und Trennen von Isolationspaketen in einfacher Weise zu automatisieren.

In Figur 6b wird eine weitere mögliche Ausführungsform eines Trennmittels zur Durchführung des erfindungsgemässen Verfahrens schematisch dargestellt. Dieses umfasst ebenfalls ein Rundmesser 41, dessen Trennflanken 42, 43 vorzugsweise asymmetrisch ausgebildet sind. Dieses Rundmesser 41 wird bei dieser Ausführungsform auf eine plane, harte Unterlage 50 gedrückt.

Es versteht sich, dass dieses erfindungsgemässe Isolatiohsteils nicht nur in der Fahrzeugindustrie, sondern ganz allgemein auch als Isolationspaket in der Maschinenindustrie zur Isolation von wärme- und lärmerzeugenden Maschinen, in der Wärme- oder Kältetechnik oder in der Computer- und Elektronikindustrie verwendet werden kann.

## Patentansprüche

1. Verfahren zur Herstellung eines Isolationspakets für ein Isolationsteil, insbesondere für ein Hitzeschild, welches Isolationspaket mindestens zwei gestapelten metallischen Blätter umfasst, **dadurch gekennzeichnet, dass** zur Bildung des Isolationspaketes (10) ein vorgegebener Bereich (A) von gestapelten metallischen Blättern (12, 14, 16, 18) mit Hilfe eines Trennmessers (51, 41) entlang einer Kontur dieses Bereichs (A) unter Bildung einer kontinuierlichen Schweissnaht (20) kaltverschweisst, d.h. metallurgisch verbunden und gleichzeitig von einem Restbereich (B) dieser gestapelten metallischen Blätter getrennt wird.

2. Verfahren nach Anspruch 1, **dadurch gekennzeichnet, dass** das Isolationspaket (10) gleichzeitig mit Falzlinien (34a, 34b) in Form von kontinuierlich verlaufenden Einkerbungen und/oder partiell verlaufenden Einschnitten versehen wird.

3. Verfahren nach einem der Ansprüche 1 oder 2, **dadurch gekennzeichnet, dass** aus den gestapelten metallischen Blättern (12, 14, 16, 18) gleichzeitig mehrere komplementär konturierte Isolationspakete (10) hergestellt werden, indem diese entlang einer gemeinsamen Schnittlinie metallurgisch verbunden und gleichzeitig getrennt werden, um damit die Menge des anfallenden Restmaterials (B) zu minimieren.

4. Isolationspaket hergestellt nach dem Verfahren gemäss Anspruch 1, insbesondere Hitzeschild, mit mehreren gestapelten, metallischen Blättern (12, 14, 16, 18), **dadurch gekennzeichnet, dass** dieses Isolationspaket (10) entlang seiner Kontur eine kontinuierliche Kaltschweissnaht (20) aufweist.

5. Isolationspaket nach Anspruch 4, **dadurch gekennzeichnet, dass** die Kaltschweissnaht (20) ca. 0.3 mm breit ist.

6. Isolationspaket nach einem der Ansprüche 4 oder 5, **dadurch gekennzeichnet, dass** dieses mindestens ein Streckblech (18) ausweist.

7. Isolationspaket nach einem der Ansprüche 4 bis 6, **dadurch gekennzeichnet, dass** dieses mindestens eine Falzlinie (34a, 34b) aufweist.

8. Isolationspaket nach einem der Ansprüche 4 bis 7, **dadurch gekennzeichnet, dass** mindestens eines der metallischen Blätter genoppt und/oder perforiert ist.

9. Trennwerkzeug zur Durchführung des Verfahrens nach Anspruch 1, **dadurch gekennzeichnet, dass** dieses ein Trennmesser (41, 51) mit zwei Trennflanken (42, 43, respektive 52, 53) aufweist, welche Trennflanken 42, 43, 52, 53) unterschiedliche Winkel zu einer Auflagefläche (55) einer unteren Formhälfte (50) dieses Trennwerkzeugs aufweisen, wobei eine erste Trennflanke (42, 52) in einem spitzen Winkel (91) von ca. 60° und eine zweite Trennflanke (43, 53) in einem weniger spitzen Winkel (93) von ca. 25° zur Auflagefläche (55) liegt.

10. Trennwerkzeug nach Anspruch 9, **dadurch gekennzeichnet, dass** das Trennmesser (41) als Rundmesser ausgebildet ist.

## Claims

1. A method for manufacturing an insulating pack for an insulation part, in particular for a heat shield, said insulating pack comprising at least two stacked metallic sheets, **characterised in that**, in order to form the insulating pack (10) a predetermined region (A) of stacked metallic sheets (12, 14, 16, 18) is cold welded or metallurgically bonded with the aid of a separating knife (51, 41) along a contour of said region (A), whilst forming a continuous welding seam (20) and is simultaneously separated from a residual region (B) of said stacked metallic sheets.

2. A method according to claim 1, **characterised in that** the insulating pack (10) is simultaneously provided with fold lines (34a, 34b) in the form of continuously running notches and/or partially running incisions.

3. A method according to one of the claims 1 or 2, **characterised in that** several complementarily contoured insulating packs (10) are manufactured simultaneously from the stacked metallic sheets (12, 14, 16, 18), **in that** these are metallurgically bonded and simultaneously separated along a common cutting line in order to thus minimise the amount of residual material (B).

4. An insulating pack manufactured according to the method of claim 1, in particular a heat shield, with several stacked, metallic sheets (12, 14, 16, 18), **characterised in that** this insulating pack (10) comprises a continuous cold-weld seam (20) along its contour.

5. An insulating pack according to claim 4, **characterised in that** the cold-weld seam (20) is approx. 0.3 mm wide.

6. An insulating pack according to one of the claims 4 or 5, **characterised in that** this comprises at least one stretch sheet metal (18).

7. An insulating pack according to one of the claims 4 to 6, **characterised in that** this comprises at least one fold line (34a, 34b).

8. An insulating pack according to one of the claims 4 to 7, **characterised in that** at least one of the metallic sheets is napped and/or perforated.

9. A separating tool for carrying out the method according to claim 1, **characterised in that** this comprises a separating knife (41, 51) with two separating flanks (42, 43 and 52, 53, respectively), said separating flanks (42, 43, 52, 53) having different angles to a contact surface (55) of a lower forming half (50) of said separating tool, wherein a first separating flank (42, 52) lies at an acute angle (91) of approx. 60° and a second separating flank lies at a less acute angle (93) of approx. 25° to the contact surface (55).

10. A separating tool according to claim 9, **characterised in that** the separating knife (41) is formed as a round knife.

## Revendications

1. Procédé pour la fabrication d'un ensemble isolant pour une pièce isolante, en particulier pour un bouclier thermique, laquelle pièce comprend au moins deux feuilles métalliques empilées, **caractérisé en ce que**, pour constituer l'ensemble isolant (10), une zone (A) prédéfinie de feuilles (12, 14, 16 et 18) métalliques empilées est soudée à froid à l'aide d'un couteau séparateur (51, 41) le long d'un contour de cette zone (A) en formant un cordon de soudure (20) continu, c'est-à-dire est reliée de façon métallurgique et est séparée en même temps d'une zone restante (B) de ces feuilles métalliques empilées.

2. Procédé selon la revendication 1, **caractérisé en ce que** l'ensemble isolant (10) est pourvu simultanément de lignes de pliage (34a, 34b) sous la forme de rainures agencées de façon continue et/ou d'entailles agencées de façon partielle.

3. Procédé selon l'une quelconque des revendications 1 ou 2, **caractérisé en ce que**, à partir des feuilles (12, 14, 16, 18) métalliques empilées, on fabrique simultanément plusieurs ensembles isolants (10) aux contours complémentaires par le fait que ces ensembles sont reliés de façon métallurgique le long d'une ligne de coupe commune et séparés simultanément, afin de minimiser ainsi la quantité du matériau restant (B) occasionné.

4. Ensemble isolant fabriqué d'après le procédé selon la revendication 1, en particulier un bouclier thermique, avec plusieurs feuilles (12, 14, 16, 18) métalliques empilées, **caractérisé en ce que** cet ensemble isolant (10) présente un cordon de soudure à froid (20) continu le long de son contour.

5. Ensemble isolant selon la revendication 4, **caractérisé en ce que** le cordon de soudure à froid (20) est large d'environ 0,3 mm.

6. Ensemble isolant selon l'une quelconque des revendications 4 ou 5, **caractérisé en ce que** cet ensemble présente au moins une tôle à étirer (18).

7. Ensemble isolant selon l'une quelconque des revendications 4 à 6, **caractérisé en ce que** cet ensemble présente au moins une ligne de pliage (34a, 34b).

8. Ensemble isolant selon l'une quelconque des revendications 4 à 7, **caractérisé en ce qu'**au moins l'une des feuilles métalliques est nopée et/ou perforée.

9. Outil de séparation pour la réalisation du procédé selon la revendication 1, **caractérisé en ce que** celui-ci présente un couteau séparateur (41, 51) avec deux flancs de séparation (42, 43 et 52, 53), lesquels flancs de séparation (42, 43, 52, 53) présentent différents angles par rapport à une surface d'appui (55) d'un demi-moule (50) inférieur de cet outil de séparation, un premier flanc de séparation (42, 52) formant un angle (91) aigu d'environ 60° et un second flanc de séparation (43, 53) un angle (93) moins aigu d'environ 25° par rapport à la surface d'appui (55).

10. Outil de séparation selon la revendication 9, **caractérisé en ce que** le couteau séparateur (41) est conçu comme un couteau rond.
